(19) Europäisches Patentamt
European Patent Office
Office européen des brevets

(11) **EP 1 560 472 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
***H05B 41/292*** (2006.01)

(21) Anmeldenummer: **04030343.0**

(22) Anmeldetag: **21.12.2004**

(54) **Betriebsverfahren für den Resonanzbetrieb von Hochdrucklampen im longitudinalen Mode und zugehöriges System und EVG**

Method for operating high pressure lamps in the longitudinal resonance mode, associated system and electronic ballast

Méthode pour alimenter des lampes haute-pression sur le mode résonant longitudinal, ballast électronique et système associés

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.01.2004 DE 102004004828**

(43) Veröffentlichungstag der Anmeldung:
**03.08.2005 Patentblatt 2005/31**

(73) Patentinhaber: **Patent-Treuhand-Gesellschaft für elektrische Glühlampen mbH 81543 München (DE)**

(72) Erfinder: **Stockwald, Klaus, Dr. 82110 Germering (DE)**

(56) Entgegenhaltungen:
**US-A1- 2003 117 085     US-A1- 2003 117 086
US-B1- 6 184 633       US-B1- 6 400 100
US-B1- 6 489 731**

**Beschreibung**

**Technisches Gebiet**

Diese Anmeldung steht in engem Zusammenhang mit der parallel eingereichten DE-Az 10 2004 004 829.0, auf die hiermit ausdrücklich bezug genommen wird.

Die Erfindung geht aus von einem Betriebsverfahren für den Resonanzbetrieb von Hochdrucklampen im longitudinalen Mode und zugehöriges System und EVG gemäß dem Oberbegriff des Anspruchs 1. Es handelt sich dabei insbesondere um Hochdruckentladungslampen mit keramischem Entladungsgefäß, bevorzugt mit einem Aspektverhältnis von mindestens 1,5.

**Stand der Technik**

Aus der US 6 400 100 ist bereits eine Betriebsverfahren für den Resonanzbetrieb von Hochdrucklampen im longitudinalen Mode und zugehöriges System und EVG bekannt. Dort wird ein Verfahren zum Auffinden der zweiten longitudinalen akustischen Resonanzfrequenz angegeben. Sie geht davon aus, dass beim kontinuierlichen Abfahren der den longitudinalen Modus anregenden Frequenz durch ein Auftreten einer relativen Brennspannungserhöhung der Lampe die Resonanzfrequenz in vertikaler Brennlage gefunden werden kann. Es zeigt sich, dass mit dieser Methode die longitudinale Frequenz für einen segregierten Bogenzustand in vertikaler Resonanz gefunden und dann beibehalten wird. Diese so gefundene Frequenz kann aber je nach Füllungszusammensetzung der Metallhalogenidfüllung und Zeitpunkt des Ablaufes der Suchprozedur deutlich zu hoch angesiedelt sein, so dass ein Anregen der akustischen Resonanz bei der mit o.g. Methode gefundenen Frequenz eine unzureichende Durchmischung ergibt und die Segregation nicht genügend gut aufhebt. Die Implementierung in ein elektronisches Vorschaltgerät ist außerdem aufwendig.

Ansonsten werden bei vorbekannten Metallhalogenidlampen ausschließlich durch Lampengeometrie, Gestalt des Innenvolumens des Entladungsgefäßes, Elektrodenabstand und Füllung (Puffergas + Auswahl der Metallhalogenide) für einen engen Leistungsbereich $P_n \pm 3\%$ die Farbtemperatur bei einem Arbeitspunkt festgelegt. Als Betriebsart zur Farbortsteuerung ist hierbei Leistungsvariation oder bei Rechteck — oder Wechselstrombetrieb auch eine Steuerung des Duty-cycle möglich, unter Nutzung von Kataphorese-Prozessen.

**Darstellung der Erfindung**

Es ist eine Aufgabe der vorliegenden Erfindung, ein Betriebsverfahren gemäß dem Oberbegriff des Anspruchs 1 bereitzustellen, das eine Farbsteuermöglichkeit für Metallhalogenidlampen schafft, insbesondere für den vertikalen Betrieb. Eine weitere Aufgabe ist es, dabei das Leistungsniveau nicht zu verändern.

Diese Aufgabe wird durch die kennzeichnenden Merkmale des Anspruchs 1 gelöst. Besonders vorteilhafte Ausgestaltungen finden sich in den abhängigen Ansprüchen.

Das erfindungsgemäße Betriebsverfahren ist darauf ausgerichtet, eine oder mehrere, bevorzugt die zweite longitudinale Resonanz anzuregen, und dabei die Amplitudenmodulation zu regeln, insbesondere zu takten mittels Pulsweitenmodulation. Dies schafft Möglichkeiten der Farbsteuerung von Metallhalogenidlampen mittels getakteter und/ oder strukturierter Amplituden-Modulation, beispielsweise in Form von Pulsweitenvariation, evtl. kombiniert mit Pulshöhen-Variation, bei gleichbleibendem Lampenleistungsniveau.

Bei einer konstanten AM kann der damit verbundene Energieeintrag nicht dosiert werden. Eine getaktete AM gestattet dagegen einen fein abgestimmten Energieeintrag, ohne dass unterschiedliche Brennlagen der Lampe zu anderen Betriebsverhältnissen führen.

Es wird dabei davon ausgegangen, dass für eine vorgegebene Geometrie des Entladungsgefäßes ein enger Toleranzbereich für die Innenlänge vorliegt. Sie stellt diejenige Dimension der Lampe dar, die die longitudinalen akustischen Resonanzen definiert, welche für eine etwaige optimale Durchmischung des Bogenplasmas, insbesondere bei vertikaler Brennlage, angeregt werden muss.

In vertikaler Brennlage ergeben sich aufgrund der Entmischung stark veränderte Schallgeschwindigkeiten gegenüber horizontaler Brennlage, die dazu führen, dass nach der Aufwärmphase der Lampe die akustischen longitudinalen Resonanz (beispielsweise f002_vert) bzgl. der horizontalen Brennlage (wie f002_hor) deutlich -meist zu höheren Frequenzen hin -- verschoben ist. Im Laufe der Zeit ändert sich dann bei üblicher Betriebsweise mit starrer Farbtemperatur, die eine allmähliche Durchmischung erreicht, diese Resonanzfrequenz, bis sie wieder derjenigen bei horizontalem Betrieb f002_hor entspricht.

Dabei zeigen sich aufgrund der sich vor allem bei vertikalem Betrieb einstellenden Segregation Abweichungen der Schallgeschwindigkeit bis zu 30 %, meist von ca. 10 bis 25 % zu höheren Werten, gegenüber dem durchmischten Zustand in horizontaler Brennlage. Beispielsweise werden Abweichungen der Schallgeschwindigkeiten bei Hg/Ar-Puffergasgemischen von ca. 15 bis 20 % gegenüber dem durchmischten Betrieb gefunden. Ein konkreter Messwert lag bei 550 m/s gegenüber 464 m/s. Die Resonanzfrequenz der zweiten longitudinalen Resonanz ist allgemein gegeben durch f002 = cl x L, wobei

$$cl = (R \cdot \kappa \cdot T/M)^{1/2}$$

die Schallgeschwindigkeit ist mit R: allg. Gaskonstante, K = Kompressibilität, T: mittlere Plasma-Temperatur, M: mittlere molare Masse des Plasma-Gases; L = axiale Länge des Entladungsgefäßes).

Die Erfindung geht aus von einem Betrieb mit einer Trägerfrequenz im mittleren HF-Bereich von 45 bis 75 kHz, typisch 50 kHz, der bevorzugt eine Sweepfrequenz als FM-Modulation aufgeprägt ist, deren Wert ausgewählt ist aus einem Bereich von 100 bis 200 Hz. Diesem Betrieb wird eine Amplitudenmodulation aufgeprägt, die durch mindestens eine der beiden Parameter AM-Grad und Zeitdauer der AM, also einem Puls-Pausen-Verhältnis sowie zeitgesteuerter AM-Tiefe AM(t) charakterisiert. Evtl. kann das Einsetzen der AM bzw. deren Manipulierung erst nach einer Aufwärmphase einsetzen. Der AM-Grad ist definiert als

$$\text{AM-Grad} = (Amax-Amin) / (Amax+Amin). \text{ Dabei ist A die Amplitude.}$$

Neben dem Verfahren beinhaltet die Erfindung Vorschaltgeräte, in welches die beschriebenen Prozeduren implementiert sind.

Im einzelnen wird bei hocheffizienten HCl-Lampen mit großer Innenlänge ein Aspektverhältnis (innere Länge/ innerer Durchmesser) des Entladungsgefäßes) von mindestens 1,5 bevorzugt, insbesondere UD =2,5-5,5. Dabei wird mit mittel- bis hochfrequentem AM-Betrieb über den Amplituden-Modulationsgrad die Intensität einer oder mehrerer longitudinaler Moden (bevorzugt die erste, zweite oder dritte) angeregt. In diesen Moden wird die Füllung in den Zentralbereich des Entladungsgefäßes transportiert und somit die Füllungsverteilung im Entladungsgefäß entlang des Bogens eingestellt. Dies ist insbesondere bei vertikal oder schräg ( > 55° Neigungswinkel) betriebenen Lampen besonders wichtig. Hierdurch verändert sich die Zusammensetzung des Dampfdruckes und auch die spektrale Absorption der abgelagerten Füllungsbestandteile. Die Modulationsfrequenz (Grundfrequenz der AM) zum Anregen der longitudinalen Moden liegt typischerweise im Frequenzbereich von 20-35 kHz. Bei einer Trägerfrequenz von typisch 45-75 kHz wird dazu eine FM (Frequenzmodulation) mit Sweep-Moden im Bereich von ca. 100-200 Hz durchgeführt.

Zur Steuerung kann nun sowohl der AM-Grad allein als auch die Zeitdauer der aufmodulierten AM-Frequenz im Sinne von Puls- und Pausenzeiten verwendet werden. Über diese Parameter AM-Grad und Puls/Pausenverhältnis, also dem Verhältnis zwischen der Zeit T, in der die AM eingeschaltet ist und der Zeit , in der die AM ausgeschaltet ist, abgekürzt T(AM-on)/T(AM-off), sowie außerdem einer zeitgesteuerten variablen Amplitudenmodulationstiefe AM(t), also einer Überstruktur des AM-Grads, lässt sich in großen Bereichen die Farbtemperatur bei hoher Lichtausbeute und gleichbleibender Lampenleistung ändern.

Insbesondere lässt sich in vertikaler Brennlage zwischen völlig segregiertem Plasmazustand und völliger Unterdrückung der Segregation hin und her steuern. Es hat sich herausgestellt, dass diese beiden Zustände unterschiedlichen Farbtemperaturen entsprechen, so dass sich sowohl diese Extremwerte, als auch dazwischenliegende Werte der Farbtemperatur mittels dem Verhältnis T(AM-on)/T(AM-off) einstellen lassen. Beispielsweise lassen sich so Farbtemperaturänderungen über 1000 K regulieren, z.B. von 3000 K bis auf 4500 K oder auch noch stärkere Farbtemperaturänderungen.

Typische Metallhalogenid-Füllungen enthalten DyJ3, CeJ3, CaJ2, CsJ, LiJ und NaJ.

Der AM-Grad liegt typisch zwischen 15 % - 40 % bei Dauerbetrieb. Er kann aber Werte zwischen 0 und 50 % erreichen, falls eine schnelle Folge von AM-Zeitbereichen mit unterschiedlicher AM verwendet wird.

Im Sinne der Erfindung kann statt des Abwechselns einer bestimmten AM-Phase mit einer Phase ohne AM auch ein Wechsel zwischen zwei unterschiedlichen AM-Phasen verwendet werden.

**Kurze Beschreibung der Zeichnungen**

Im folgenden soll die Erfindung anhand mehrerer Ausführungsbeispiele näher erläutert werden. Es zeigen:

Figur 1        ein Entladungsgefäß einer Hochdrucklampe, schematisiert;

Figur 2        ein schematisiertes Leistungsspektrum einer mit AM und FM modulierten Hochdrucklampe zur Stabilisierung mittels akustisch angeregter longitudinaler Resonanz;

Figur 3        den schematischen Aufbau eines elektronischen Vorschaltgeräts;

Figur 4 - 10    verschiedene zeitliche Verläufe des AM-Index auf dem Trägersignal.

**Bevorzugte Ausführung der Erfindung**

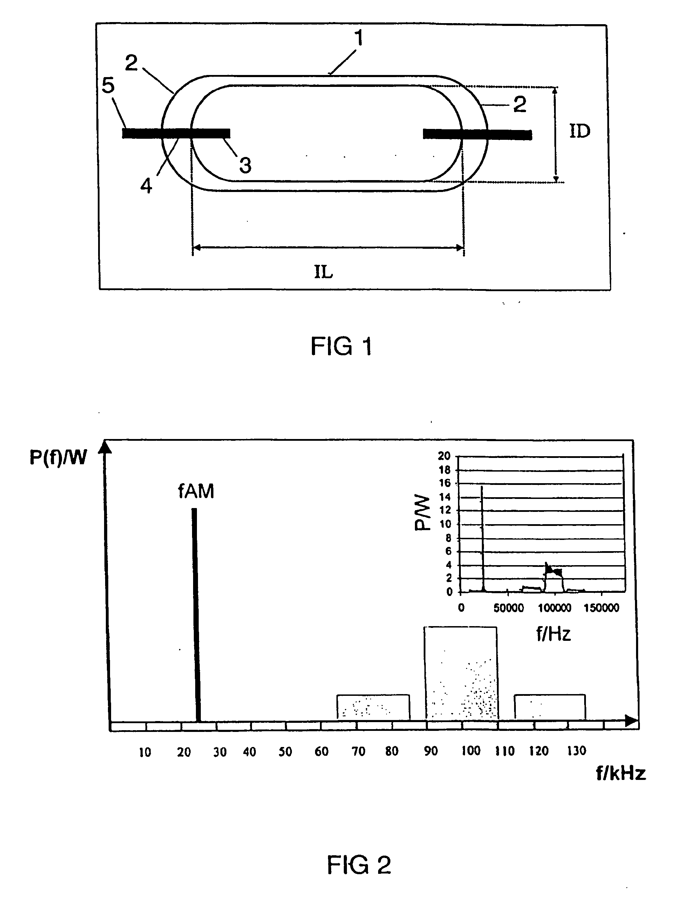

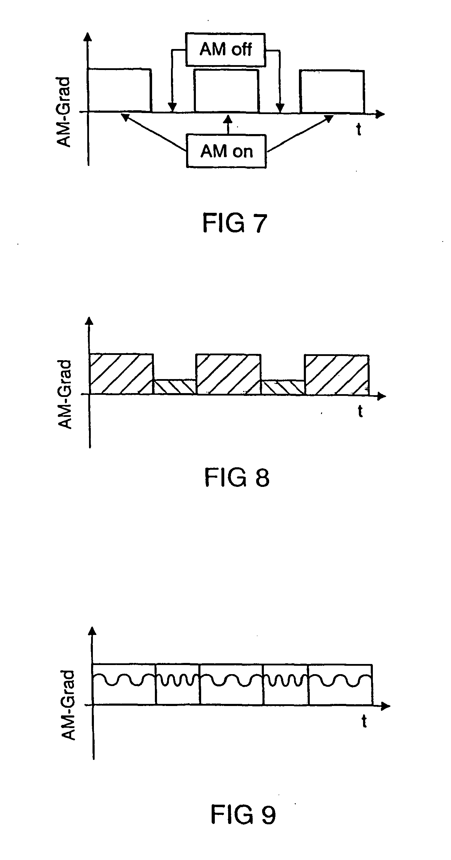

In Fig. 1 ist eine schematische Darstellung einer Hochdrucklampe mit relativ hohem Aspektverhältnis ID/IL gezeigt. Sie verwendet ein zylindrisches Entladungsgefäß 1 aus Keramik, mit einem gegebenem Innendurchmesser ID und gegebener Innenlänge IL. An den Enden 2 des Entladungsgefäßes sind Elektroden 3 angeordnet, die mittels Durchführungen 4 mit Stromzuführungen 5 verbunden sind. das Entladungsgefäß enthält typisch eine Füllung aus Puffergas Hg mit Argon und Metallhalogeniden, beispielsweise einer Mischung aus Alkali- und Seltenerdjodiden sowie des Thallium. Die Lampe wird an einem elektronischen Vorschaltgerät, siehe Figur 8, mit Hochfrequenz in akustisch stabilisierter Resonanz betrieben. Dafür hat sich vor allem die zweite longitudinale Resonanz empfohlen.

Die näher untersuchte Lampe ist eine hocheffiziente Metallhalogenidlampe mit 70 W Leistung. Das Entladungsgefäß hat eine größte axiale Innenlänge IL von 18.7 mm und einen Innendruchmesser ID von 4 mm. Das Aspektverhältnis ist somit 4.7. Die Hochdrucklampe ist mit 4.4 mg Hg und einer Metallhalogenidmischung bestehend aus Nal:Cel3:Cal2:TII = 1.78 : 0.28 : 1.93 : 0.28 mg gefüllt. Der Elektrodenabstand beträgt 14.8 mm.

Durch Voruntersuchungen wurde festgestellt, dass ein bogenstabilisierter Betrieb möglich ist, bei dem der Bogen in vertikaler und horizontaler Brennlage auf die E-lektrodenverbindungslinie zentriert ist. Dafür wird ein Betrieb mit gesweepter Hochfrequenz im Bereich von 45-55 kHz mit typischer Sweep-Rate von $f_{FM}$ = 130 Hz als Ausgangspunkt genommen.

In vertikaler Brennlage zeigt sich nach dem Betriebsstart und einer Aufwärmphase von ca. 120 sec eine segregierte, also entmischte Metallhalogenidverteilung entlang des Bogens. Der in der Dampfphase befindliche Anteil der Metallhalogenide ist nicht gleichmäßig über die Bogenlänge verteilt. Die Emission der Alkali- und SE-Jodide konzentriert sich im unteren Drittel der Lampe, während im oberen Teil bis zur oberen Elektrode hauptsächlich Emission von Hg und TI beobachtet wird. In diesem Zustand besitzt die Lampe eine relativ geringe Farbwiedergabe und eine relativ geringe Lichtausbeute. Hinzu kommt, dass sich die Farbtemperatur in vertikaler Brennlage wesentlich von der bei horizontaler Brennlage unterscheidet, und zwar um bis zu 1500 K.

Durch das Aufprägen einer Amplitudenmodulation mit einer starren Frequenz $f_{AM}$ von ca. 25 kHz mit AM-Grad von 10-30 % wird entsprechend der schematisierten Fig. 2 (kleines Bild zeigt die reale Messung) ein elektrisches Leistungsspektrum in der Lampe bei einer Sweep-Rate von 130 s-1, also über die Zeitspanne von 7,7 ms, im Bereich 20 bis 150 kHz erzeugt. Höhere Ordnungen werden hier aufgrund der Möglichkeit ihrer Unterdrückung nicht weiter berücksichtigt. Der Leistungsanteil im Bereich der AM-Frequenz (25 kHz) wirkt anregend auf die zweite akustische longitudinale Resonanz $f_{002}$.

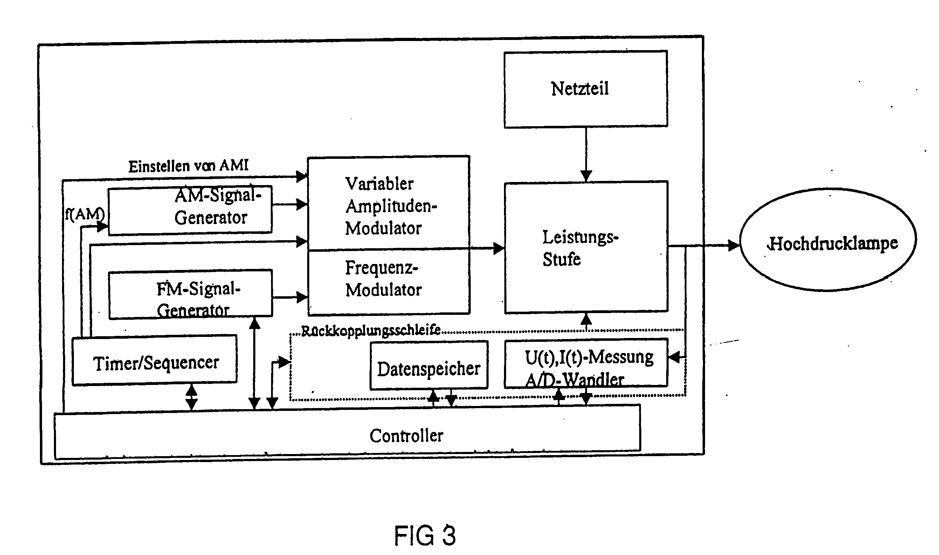

In Fig. 3 ist ein Prinzipschaltbild eines zugehörigen Elektronischen Vorschaltgeräts (EVG) gezeigt. Es weist folgende essentielle Komponenten auf:

Timer/Sequencer: Hier erfolgt die Zeitschema-Kontrolle zur Steuerung der Zeitdauer der Aufwärmphase und Einsetzen der Prägephase nach Zünden und Bogenübernahme der Hochdrucklampe. Hier erfolgt außerdem die Steuerung der Sweep-Rate für die Lampenbogen-Stabilisierung.

Weiterhin wird die Scan-Rate sowie Verweildauer am jeweiligen Frequenzpunkt beim Durchlaufen von Frequenz-Scans sowie die Festlegung von Pausenzeiten zwischen aufeinaderfolgenden Prozedurschritten gesteuert.

Power stage (Leistungsendstufe): Voll- oder Halbbrücke mit strombegrenzenden Elementen und typischen Frequenzgang. Sie ist über eine Versorgungsschiene (450 V DC) an das Netzteil gekoppelt)

Feed-back-Loop (Rückkopplungsschleife): Betriebserkennung der Lampe evtl. Rückkopplung von Lampenparametern wie Lampenstrom und Lampenspannung zur Einstellung der Steuerparameter und Festlegung von Aufwärm- bzw. Prägephase, bzw. Wiederholung von Prägephasen mit anderen Abstimmparametern.

Hier ist ein Schaltungsteil zur hinreichend genauen Messung von Strom und Spannung am EVG-Ausgang (Lampe) implementiert. Über diesen werden über einen A/D-Wandler die Messwerte für die Verarbeitung im Controller weiterverarbeitet. Die anfallenden Daten werden für weitere Auswertungsprozeduren in einen Daten-Speicher geschrieben.

Lampe: Hochdruck-Entladungslampe (HID lamp)

FM-Modulator: Hochleistungsfrequenzmodulator

AM-Modulator: Analoger variabler Hochleistungsmodulator mit Möglichkeit der Kontrolle sowohl der Frequenz $f_{AM}$ als auch des AM-Grades AMI

AM-Signal-Generator: Digital oder Spannungskontrollierter Oszillator

FM-Signal Generator: Digital oder Spannungskontrollierter Oszillator

Power Supply (Netzteil): Rail Voltage Generator

Controller: Zentrale Kontrolle aller Einheiten

Im folgenden werden mehrere Ausführungsbeispiele des neuen Betriebsverfahrens erläutert.

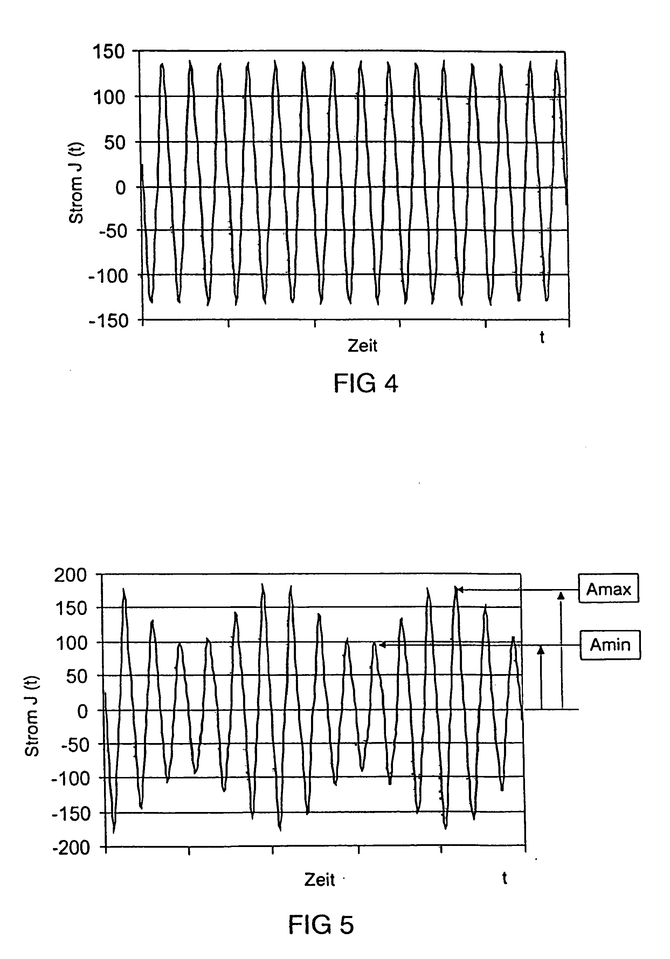

Der einfachste Fall ist der Betrieb mit der reinen Trägerfrequenz. Im Lampenbetrieb wird diese Frequenz frequenzmoduliert (FM) und dafür typischerweise sägezahnartig gesweept. Dies bedeutet einen AM-Grad = 0 und führt im Vertikalbetrieb zur bewusst eingestellten Segregation, also der Entmischung des Plasmas. Ein Beispiel ist in Figur 4 gegeben, wo der Strom als Funktion der Zeit gegeben ist. Im Bilde der oben eingeführten Sprache bedeutet dies einen Dauerbetrieb, also T(AM-off) = ∞.

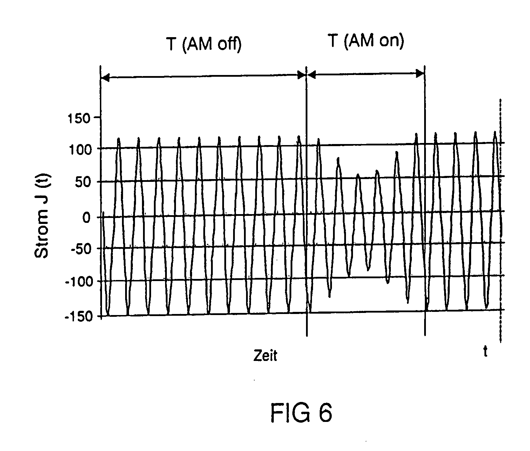

In Figur 5 ist ein Beispiel für einen AM-Dauerbetrieb angegeben, also T(AM-on) = ∞. Dort sind auch die maximale und minimale Amplitude Amax und Amin eingezeichnet. Diese AM läuft über die ganze Betriebsdauer.

Erfindungsgemäß wird jedoch eine Mischung aus beiden Zuständen oder eine geeignete Modifizierung verwendet. Dabei wechseln im einfachsten Fall Abschnitte mit AM-on und Zeiträume mit AM-off einander regelmäßig oder nach Bedarf ab. Die Zeitdauer einer Zufuhr von AM-on ist T(AM-on). Die Zeitdauer einer Zufuhr von AM-off ist T(AM-off) . Beide Phasen wechseln einander ab. Es hat sich gezeigt, dass insbesondere ein relativ niedriges Verhältnis T(AM-on)/T(AM-off), der einem kontinuierlichen AM-Betrieb mit einem "äquivalenten" AM-Grad von ca. 15-35% entsprechen würde, zur Aufhebung der Segregation im Vertikalbetrieb führt. Figur 6 zeigt die Aneinanderreihung von Zeitdauern mit AM-off und AM-on schematisch.

Bevorzugt liegt das Verhältnis T(AM-on)/T(AM-off) , also das Puls-Pausen-Verhältnis, zwischen 0 und T(f(AM)) und Tsweep.

Statt dessen kann jedoch einer gegebenen AM nochmals eine Struktur aufgeprägt werden, entweder eine Unterstruktur, beispielsweise im Sinne einer Dämpfung, oder eine Überstruktur, beispielsweise rampenförmig, trapezförmig oder sinusförmig. Auch hier lässt sich ein äquivalenter AM-Grad definieren. Dies kann mit oder bevorzugt ohne Totzeiten AM-off erfolgen. In diesem Sinne ist auch die obige dargestellte getaktete AM eine Überstruktur mit Rechteckform.

Bei geeigneter Wahl des "äquivalenten" AM-Grads wird in einen vorgegebenen akustisch eingeschwungenen Zustand der Gasentladungssäule bzw. Plasma akustische Leistung in den anregenden Zustand entweder getaktet und/ oder gesteuert durch die Stärke der akustischen Resonanz (bzw. schallintensitätsgesteuert) eingekoppelt. Hierdurch werden Füllungstransportprozesse in der Lampe derart gesteuert, dass mit bestimmten Überstrukturen jeweils bestimmte Farbtemperaturen der Metallhalogenidlampe verbunden sind.

Aufgrund der Dämpfung der Schallwellen ergeben sich typische Zeitdauern sowohl für den Einschwingvorgang, als auch für die maximalen Pausenzeiten T(AM-off) und die Dynamik der Amplitudenmodulationstiefe (AM-Grad), die den anregenden Stromsignalen aufgeprägt werden können.

Die AM-Tiefe ist bestimmt durch folgende Faktoren:

T1 = Periodendauer der Trägerfrequenz;
$\tau$(AM_damp) = Dämpfungszeit bei beispielsweise gedämpftem AM-Signalzug;
T2 = Periodendauer der Amplitudenmodulationsfrequenz;
AM-Grad = Amplitudenmodulationsgrad (typisch 15-35%);
T(AM-on) = Taktdauer der eingeschalteten AM;
T(AM-off) = Pausendauer der AM.

Als Beispiele sind gedämpfte und ungedämpfte Verläufe möglich. Teilweise wird statt des Begriffs AM-Grad auch der Begriff AM-Index verwendet.

In Figur 7 ist ein schematisiertes Beispiel gegeben mit konstantem AM-Grad mit festen Zeiten Tn(AM-on) mit Phasen AM-on und festen Zeiten Tf(AM-off) mit Phasen AM-off, die regelmäßig aufeinanderfolgen. Es entspricht im wesentlichen der Figur 6, jedoch in Blöcken dargestellt.

In Figur 8 ist ein Beispiel mit Wechsel zweier stabiler AM-Grade gezeigt. Es handelt sich beispielsweise um einen festen AM-Grad mit festen Zeitdauern T1 und T2, während denen unterschiedlich hohe maximale Amplituden Amax1 und Amax2 verwendet werden.

Eine weiteres Ausführungsbeispiel ist in Figur 9, nämlich der Wechsel zwischen zwei unterschiedlichen AM-Graden, beispielsweise 20 und 30 %, bei gleicher Amplitude Amax.

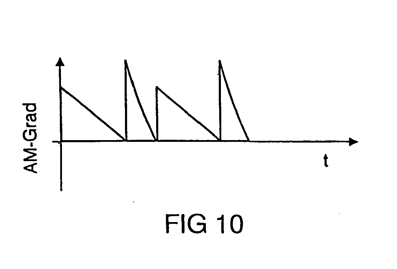

Ein weiteres Beispiel zeigt Figur 10. Dort sind zwei einander abwechselnde gedämpfte dynamische AM-Grade gezeigt, also AM-Grade mit unterschiedlicher maximaler Amplitude Amax, wobei die maximale Amplitude jeweils innerhalb eines Kurvenzugs der Zeitdauer T1 bzw. 2 unterschiedlich stark gedämpft ist.

Selbstverständlich können diese unterschiedlichen Arten des Betriebs auch untereinander geeignet kombiniert werden.

Bei Anwendung einer Taktung soll die Gesamtzeitdauer Tg eines Zyklus

$$Tg = T(AM\text{-}on) + T(AM\text{-}off)$$

typische Periodizitäten im Bereich Tg ≤ 20 ms aufweisen, also quasi mindestens einem 50 Hz-Betrieb entsprechen.

Das Verhältnis T(AM-on)/T(AM-off) kann dabei nahezu beliebig sein, wobei ein Minimalwert der bevorzugten Zeitspannen für T(AM-on) typisch bei 5 bis 10 Periodendauern (entsprechend 0.2-0.4 ms) der AM-Frequenz, die typisch bei 20 bis 40 kHz, beispielsweise bei 24.4 kHz, liegt. Dadurch wird ein Einschwingen der Gasentladungssäule in eine Eigenresonanz gewährleistet.

Die Phase des Signals AM-on ist bevorzugt angekoppelt an die Phase des AM-Signals, jedoch ist diese Forderung nicht absolut notwendig, falls die Zeitdauer des Signals AM-on, also der Wert T(AM-on) genügend groß ist. Es ergeben sich somit minimale Duty-cycles der AM von typ. 0.2/20 = 1/100. Als Duty-cycle ist das Verhältnis T(AM-on)/Tg definiert, wobei Tg oben definiert ist.

Eine typische Dämpfungszeit τ(AM-damp) der abklingenden Resonanzschwingung gemäß Figur 10 liegt im Bereich von 20 bis 50 ms bei Hg-dominierten Plasmen, also Füllungen, die neben Metallhalogeniden auch Quecksilber als entscheidende Ingredienz enthalten.

Die Möglichkeiten der getakteten und zeitlich wiederum modulierten AM-Modulation ergibt ein Spektrum von Steuermoden zur Einstellung der Segregation und damit zur Farbsteuerung in mit diesem Prinzip betriebenen Lampen.

## Patentansprüche

1. Betriebsverfahren für den Resonanzbetrieb von Hochdrucklampen im longitudinalen Mode unter Benutzung einer hochfrequenten Trägerfrequenz, die insbesondere mittels Sweepsignal frequenzmoduliert (FM) ist, und die gleichzeitig amplitudenmoduliert (AM) wird, wobei zunächst eine Grundfrequenz der AM definiert wird, wobei die Grundfrequenz der AM vom i-ten, bevorzugt dem zweiten, longitudinalen Mode abgeleitet ist, **dadurch gekennzeichnet, dass** nach dem Zünden der Lampe und Abwarten einer Karenzzeit die Einstellung der Farbtemperatur bei vorgegebener Leistung dadurch erfolgt, dass die Amplitudenmodulation periodisch zwischen mindestens zwei Zuständen wechselt, wobei sich die beiden Zustände mindestens durch einen der beiden Parameter AM-Grad und Zeitdauer der AM voneinander unterscheiden, wobei ein erster Zustand einer ersten Farbtemperatur und einer stärkeren Entmischung des Plasmas entspricht und ein zweiter Zustand einer zweiten Farbtemperatur und einer, verglichen mit dem ersten Zustand, besseren Durchmischung des Plasmas entspricht.

2. Betriebsverfahren nach Anspruch 1, **dadurch gekennzeichnet, dass** die Frequenz des Sweepsignals von den ersten azimutalen und radialen Modi abgeleitet wird.

3. Betriebsverfahren nach Anspruch 1, **dadurch gekennzeichnet, dass** ein Controller die Grundfrequenz des AM-Signals einstellt.

4. Betriebsverfahren nach Anspruch 2, **dadurch gekennzeichnet, dass** die Sweepfrequenz im Betrieb konstant gehalten wird und dass sie im Bereich zwischen dem ersten azimutalen und radialen Mode liegt.

5. Betriebsverfahren nach Anspruch 1, **dadurch gekennzeichnet, dass** die Karenzzeit etwa 30 bis 80 sec dauert.

6. Betriebsverfahren nach Anspruch 1, **dadurch gekennzeichnet, dass** als Realisierung der AM-Zustände zwei feste AM-Grade zeitlich einander abwechseln.

7. Betriebsverfahren nach Anspruch 6, **dadurch gekennzeichnet, dass** die Realisierung erfolgt, indem ein fester AM-Grad zeitlich getaktet wird, so dass ein AM-Grad = 0 % ist.

8. Betriebsverfahren nach Anspruch 1, **dadurch gekennzeichnet, dass** als Realisierung der AM-Zustände sich die Amplitude eines fester AM-Grads stufenartig, abrupt, allmählich oder differenzierbar sich mit vorgegebener Periodizität ändert.

9. Betriebsverfahren nach Anspruch 1, **dadurch gekennzeichnet, dass** als Realisierung der AM-Zustände der AM-Grad selbst amplitudenmoduliert ist.

10. Betriebsverfahren nach Anspruch 1, **dadurch gekennzeichnet, dass** als Realisierung der AM-Zustände der AM-Grad zeitlich strukturiert ist, insbesondere gedämpft ist.

11. Betriebsverfahren nach Anspruch 1, **dadurch gekennzeichnet, dass** bei der Realisierung der AM-Zustände ein aus der periodischen AM abgeleiteter äquivalenter gesamter AM-Grad im Bereich zwischen 15 und 35 % liegt.

12. Betriebsverfahren nach Anspruch 6, **dadurch gekennzeichnet, dass** ein aus dem Verhältnis zwischen der Zeitdauer T1 eines ersten AM-Grads und der Zeitdauer T2 eines zweiten AM-Grads abgeleiteter äquivalenter gesamter AM-Grad im Bereich zwischen 15 und 35 % liegt.

13. Elektronisches Vorschaltgerät zum hochfrequenten Resonanzbetrieb einer Hochdruckentladungslampe gemäß dem Verfahren nach Anspruch 1, mit einem Sweepsignalgenerator, einem Amplituden-Modulator, einem Mischer für beide Generatoren, **dadurch gekennzeichnet, dass** ein Controller die Grundfrequenz des Amplitudenmodulationssignals regelt, wobei der Controller die Amplitudenmodulation so steuert, dass die Amplitudenmodulation periodisch zwischen mindestens zwei Zuständen wechselt, wobei sich die beiden Zustände mindestens durch einen der beiden Parameter AM-Grad und Zeitdauer der AM voneinander unterscheiden, wobei ein erster Zustand einer ersten Farbtemperatur und einer stärkeren Entmischung des Plasmas entspricht und ein zweiter Zustand einer zweiten Farbtemperatur und einer, verglichen mit dem ersten Zustand, besseren Durchmischung des Plasmas entspricht.

14. System aus Hochdruckentladungslampe und zugehörigem Elektronischen Vorschaltgerät (EVG), mit einem Entladungsgefäß, das Metallhalogenide enthält, **dadurch gekennzeichnet, dass** das Aspektverhältnis des Entladungsgefäßes ≥ 1,5, bevorzugt ≥ 2,5, ist, wobei das EVG ein EVG gemäß Anspruch 13 ist.

**Claims**

1. Operating method for the resonant operation of high-pressure lamps in longitudinal mode, using a high-frequency carrier frequency that is frequency-modulated (FM), in particular by means of sweep signal, and which is simultaneously amplitude-modulated (AM), firstly a fundamental frequency of a AM being defined and the fundamental frequency of the AM being derived from the ith, preferably the second, longitudinal mode, **characterized in that** after the ignition of the lamp and waiting out a waiting time the color temperature is set for a prescribed power by alternating the amplitude modulation periodically between two states, the two states differing from one another at least by one of the two parameters of AM degree and duration of the AM, a first state corresponding to a first color temperature and a stronger demixing of the plasma, and a second state corresponding to a second color temperature and, by comparison with the first state, a better mixing of the plasma.

2. Operating method according to Claim 1, **characterized in that** the frequency of the sweep signal is derived from the first azimuthal and radial modes.

3. Operating method according to Claim 1, **characterized in that** a controller sets the fundamental frequency of the AM signal.

4. Operating method according to Claim 2, **characterized in that** the sweep frequency is kept constant during operation, and **in that** it is in the range between the first azimuthal and radial modes.

5. Operating method according to Claim 1, **characterized in that** the waiting time lasts approximately 30 to 80 sec.

6. Operating method according to Claim 1, **characterized in that** two fixed AM degrees alternate with one another over time as implementation of the AM states.

7. Operating method according to Claim 6, **characterized in that** the implementation is performed by one fixed AM degree such that one AM degree is = 0%.

8. Operating method according to Claim 1, **characterized in that** as implementation of the AM states a fixed AM degree changes in steps, abruptly, gradually or differentially with a prescribed periodicity.

9. Operating method according to Claim 1, **characterized in that** the AM degree itself is amplitude-modulated as implementation of the AM states.

10. Operating method according to Claim 1, **characterized in that** the AM state is temporally structured, in particular damped, as implementation of the AM states.

11. Operating method according to Claim 1, **characterized in that** when the AM states are implemented an equivalent total AM degree derived from the periodic AM is in the range between 15 and 35%.

12. Operating method according to Claim 6, **characterized in that** an equivalent total AM degree derived from the ratio between the time period T1 of a first AM degree and the time period T2 of a second AM degree is in the range between 15 and 35%.

13. Electronic ballast for high-frequency resonant operation of a high-pressure discharge lamp in accordance with the method according to Claim 1, having a sweep signal generator, an amplitude modulator and a mixer for the two generators, **characterized in that** a controller controls the fundamental frequency of the amplitude modulation signal, the controller controlling the amplitude modulation such that the amplitude modulation alternates periodically between at least two states, the two states differing from one another at least by one of the two parameters of AM degree and duration of the AM, a first state corresponding to a first color temperature and a stronger demixing of the plasma, and a second state corresponding to a second color temperature and, by comparison with the first state, a better mixing of the plasma.

14. System composed of a high-pressure discharge lamp and associated electronic ballast (EB), having a discharge vessel that contains metal halides, **characterized in that** the aspect ratio of the discharge vessel $\geq 1.5$, preferably $\geq 2.5$, the EB being an EB according to Claim 13.

## Revendications

1. Procédé pour faire fonctionner à la résonance des lampes à haute pression dans le mode longitudinal en utilisant une fréquence porteuse de haute fréquence qui est modulée en fréquence au moyen d'un signal Sweep (FM) et qui est modulée en même temps en amplitude (AM), une fréquence fondamentale de l'AM étant définie, la fréquence fondamentale de l'AM étant dérivée du i$^{\text{ème}}$ mode longitudinal, de préférence du deuxième, **caractérisé en ce qu'**après l'amorçage de la lampe et écoulement d'une durée de carence, on effectue le réglage de la température de couleur pour une puissance prescrite en alternant la modulation d'amplitude périodiquement entre au moins deux états, les deux états se distinguant l'un de l'autre au moins par l'un des deux paramètres, degré AM et durée de l'AM, un premier état correspondant à une première température de couleur et à une démixtion plus grande du plasma et un deuxième état à une deuxième température de couleur et à un meilleur mélange du plasma par rapport au premier état.

2. Procédé suivant la revendication 1, **caractérisé en ce que** l'on déduit la fréquence du signal Sweep des premiers modes azimutaux et radiaux.

3. Procédé suivant la revendication 1, **caractérisé en ce qu'**un dispositif de commande règle la fréquence fondamentale du signal AM.

4. Procédé suivant la revendication 2, **caractérisé en ce que** l'on maintient constante en fonctionnement la fréquence Sweep et elle se trouve dans le domaine compris entre le premier mode azimutal et radial.

5. Procédé suivant la revendication 1, **caractérisé en ce que** le temps de carence dure entre environ 30 à 80 secondes.

6. Procédé suivant la revendication 1, **caractérisé en ce que**, comme réalisation des états AM, deux degrés AM fixes alternent l'un avec l'autre dans le temps.

7. Procédé suivant la revendication 6, **caractérisé en ce que** l'on effectue la réalisation en cadençant dans le temps un degré AM fixe de manière à ce qu'un degré AM soit égal à 0 %.

8. Procédé suivant la revendication 1, **caractérisé en ce que**, comme réalisation des états AM, on modifie l'amplitude d'un degré AM fixe par palier, d'une manière abrupte, peu à peu ou d'une façon différenciable avec une périodicité prescrite.

9. Procédé suivant la revendication 1, **caractérisé en ce que**, comme réalisation des états AM, le degré AM soi-même est modulé en amplitude.

10. Procédé suivant la revendication 1, **caractérisé en ce que**, comme réalisation des états AM, le degré AM est structuré dans le temps en étant notamment amorti.

11. Procédé suivant la revendication 1, **caractérisé en ce que**, dans la réalisation des états AM, un degré AM global équivalent dérivé des AM périodiques se trouve dans la plage comprise entre 15 et 35 %.

12. Procédé suivant la revendication 6, **caractérisé en ce qu'**un degré AM global équivalent dérivé du rapport entre la durée T1 d'un premier degré AM et la durée T2 d'un deuxième degré AM se trouve dans la plage comprise entre 15 et 35 %.

13. Ballast électronique pour faire fonctionner à la résonance en haute fréquence une lampe à décharge à haute pression suivant le procédé de la revendication 1 comprenant un générateur de signal Sweep, un modulateur d'amplitude, un mélangeur pour les deux générateurs, **caractérisé en ce qu'**un dispositif de commande règle la fréquence fondamentale du signal de modulation d'amplitude, le dispositif de commande commandant la modulation d'amplitude de façon à ce que la modulation d'amplitude alterne périodiquement entre au moins deux états, les deux états se distinguant l'un de l'autre au moins par l'un des deux paramètres, degré AM et durée de l'AM, un premier état correspondant à une première température de couleur et à une démixtion plus grande du plasma et un deuxième état à une deuxième température de couleur et à un mélange du plasma meilleur par rapport au premier état.

14. Système constitué d'une lampe à décharge à haute pression et d'un ballast électronique associé comprenant une enceinte de décharge qui contient des halogénures métalliques, **caractérisé en ce que** le rapport d'aspect de l'enceinte de décharge est supérieur ou égal à 1,5, de préférence supérieur ou égal à 2,5, le ballast électronique étant un ballast électronique suivant la revendication 13.

FIG 1

FIG 2

FIG 3

EP 1 560 472 B1

FIG 4

FIG 5

FIG 6

FIG 7

FIG 8

FIG 9

FIG 10

**EP 1 560 472 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004004829

- US 6400100 B